Europäisches Patentamt

European Patent Office

Office européen des brevets

(11) Numéro de publication : **0 006 097**
**B1**

(12) **FASCICULE DE BREVET EUROPÉEN**

(45) Date de publication du fascicule du brevet :
09.06.82

(51) Int. Cl.³ : **B 65 H 51/14, H 02 G 1/06**

(21) Numéro de dépôt : 78200040.0

(22) Date de dépôt : 13.06.78

(54) Transporteur de câbles.

(73) Titulaire : Plumettaz S.A.
**Route de Massongex**
**CH-1880 Bex (Canton de Vaud) (CH)**

(72) Inventeur : **Plumettaz, Gérard**
**Ruelle de l'Echaud**
**CH-1880 BEX (Canton de Vaud) (CH)**

(74) Mandataire : Bovard, Fritz Albert et al
**Bovard & Cie Ingénieurs- Conseils ACP et Avocats**
**Optingenstrasse 16**
**CH-3000 Berne 25 (CH)**

(43) Date de publication de la demande :
09.01.80 (Bulletin 80/01)

(45) Mention de la délivrance du brevet :
09.06.82 Bulletin 82/23

(84) Etats contractants désignés :
CH DE FR GB NL SE

(56) Documents cités :
DE - A - 2 542 418
DE - B - 1 169 368
FR - A - 1 473 248
FR - A - 1 557 074
FR - A - 2 345 389
NL - A - 64 00260
NL - A - 69 12251
US - A - 3 473 715

Imprimerie Jouve, 18, rue St-Denis, 75001 Paris, France

Transporteur de câble

La présente invention a pour objet un transporteur de câble comprenant un organe moteur, un train d'entraînement du câble formé de deux ensembles de support et d'entraînement placés en V sous le câble et d'un ensemble de solidarisation agissant verticalement sur le câble pour assurer son contact avec les ensembles de support et d'entraînement et un bâti comportant un socle rigide disposé sous les deux ensembles de support et d'entraînement et entre eux.

Les transporteurs de câbles sont utilisés pour la mise en place des câbles ou tubes dans des tranchées, dans des galeries ou à l'intérieur de conduites tubulaires lorsqu'il s'agit de les installer en sous-sol ou sur des consoles dans des galeries. Souvent, ils sont combinés avec des treuils, mais on utilise également des transporteurs sans treuils comme organes intermédiaires. Les exigences qui sont posées par la pratique à des appareils de ce genre sont multiples et contradictoires. Il est avantageux que les transporteurs soient aussi légers et faciles à installer que possible. Cependant, leur stabilité doit être suffisante.

Il est aussi avantageux que les transporteurs soient de dimensions réduites tout en assurant l'entraînement et le guidage du câble de façon fiable. Dans certains cas, le transporteur est appelé à pousser le câble devant lui, alors que dans d'autres cas, la résistance principale s'exerce à l'arrière du transporteur.

Cependant, en général, le câble à poser est accroché par son extrémité antérieure à un câble de traction métallique qui s'enroule sur un treuil placé à l'extrémité d'un tronçon du chantier de pose du câble. Les transporteurs ont alors pour seule fonction de guider le câble, d'assurer son déplacement régulier et de soulager la traction à l'extrémité. Toutefois, il se pose un problème de réglage car les vitesses des transporteurs et du treuil doivent être synchronisées. Il est essentiel d'éviter que le câble subisse des efforts de traction dépassant des limites précises, données par la construction du câble et qui, souvent, sont relativement basses. En effet, c'est lors de sa pose que le câble subit les efforts de traction maxima. Or les exigences imposées à la résistance du câble à la traction se répercutent sur son prix de revient. Il est donc très avantageux de réaliser des installations de pose des câbles qui permettent cette opération avec une sollicitation minimale.

On connaît déjà différents modèles de transporteurs de câbles avec ou sans treuil répondant à la définition donnée plus haut. Ces transporteurs sont équipés d'un moteur à explosion ou d'un moteur électrique. Le ou les ensembles de support et d'entraînement comportent, soit des roues à dents de chaînes supportant des chaînes équipées de sabots, soit des roues à pneus profilés, soit des rangées de poulies ou galets sur lesquels sont montées des courroies, ces dernières étant profilées de façon à former des gorges pour recevoir le câble.

L'ensemble de solidarisation comporte souvent (voir DE-A 25 42 418) un certain nombre de galets à gorge profilée qui sont montés sur des bras articulés, maintenus par des ressorts et qui peuvent être pressés sur le câble, soit par des vérins hydrauliques, soit par d'autres dispositifs par exemple à vis de mise en pression. Dans les transporteurs connus jusqu'à maintenant, le bâti est une construction qui entoure l'organe moteur et le train d'entraînement en assurant la rigidité de l'appareil.

Le but de la présente invention est de réaliser un transporteur de câbles du genre mentionné au début qui satisfasse mieux que jusqu'à maintenant aux diverses exigences rappelées ci-dessus et qui, en particulier, soit de dimensions réduites et puisse être mis en place dans une tranchée sans nécessiter aucun engin de levage ou de déplacement.

Un but secondaire de l'invention est de permettre la réalisation d'installations de pose de câbles comportant un treuil et une série de transporteurs avec des moyens de commande permettant de synchroniser facilement les transporteurs avec le treuil et d'assurer la pose d'un câble en évitant avec une sécurité complète tout risque que le câble soit soumis à des contraintes de traction dépassant une limite donnée.

Dans ce but, le transporteur selon l'invention, du genre mentionné au début, est caractérisé en ce que lesdits ensembles de support et d'entraînement comportent des galets montés en porte-à-faux sur des arbres supportés eux-mêmes par le bâti, le socle et l'organe moteur ne dépassant pas en largeur l'encombrement du train d'entraînement du câble, et en ce que l'ensemble de solidarisation est supporté par une armature rigide qui ne dépasse pas non plus, en largeur, dans sa position de travail, l'encombrement du train d'entraînement et qui s'appuie sur les extrémités supérieures desdits arbres.

On va décrire ci-après, à titre d'exemple, une forme d'exécution de l'objet de l'invention en se référant au dessin dont :
la figure 1 est une vue en élévation latérale,
la figure 2 une vue en élévation frontale,
la figure 3 une vue partielle à plus grande échelle, partiellement en coupe selon la ligne III-III de la fig. 1, et partiellement en élévation,
la figure 4 une vue en coupe partielle à plus grande échelle selon la ligne IV-IV de la fig. 1, et
la figure 5 une vue semblable à la fig. 2 à plus petite échelle montrant le transporteur installé dans une tranchée et un groupe de commande placé à l'extérieur de la tranchée.

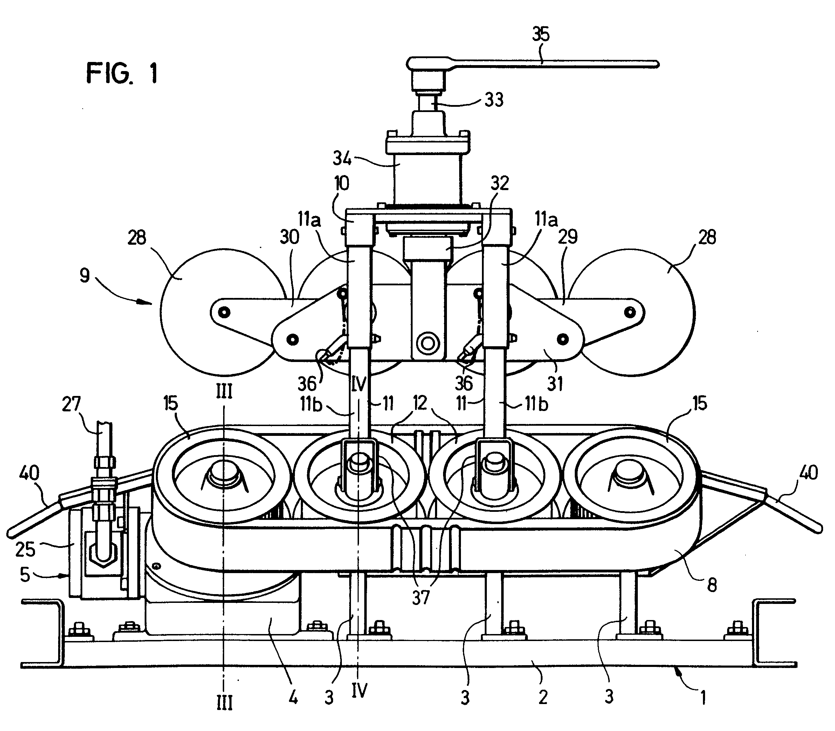

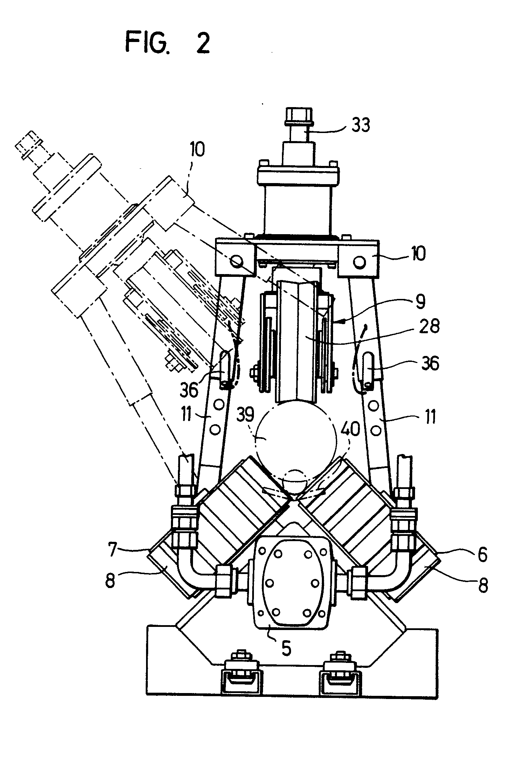

Les figures 1 et 2 montrent l'agencement général du transporteur. Le socle 1 comporte un châssis en fer profilé 2 sur lequel sont vissés trois pieds 3 et un carter 4. Ce dernier porte un moteur hydraulique 5 disposé à une extrémité de l'appareil. Le train d'entraînement mis en mouvement par le moteur 5 comporte deux ensembles de support et d'entraînement 6 et 7 (fig. 2) qui comportent chacun, comme on le verra plus loin, quatre galets (12, 15) et une courroie crantée 8 et un ensemble de solidarisation 9 constitué par une série de galets 28 supportés par des leviers articulés à une armature 10 dont les montants 11 sont reliés au socle 1. L'ensemble de solidarisation ne comporte pas de courroie et les galets 28 agissent directement sur le câble.

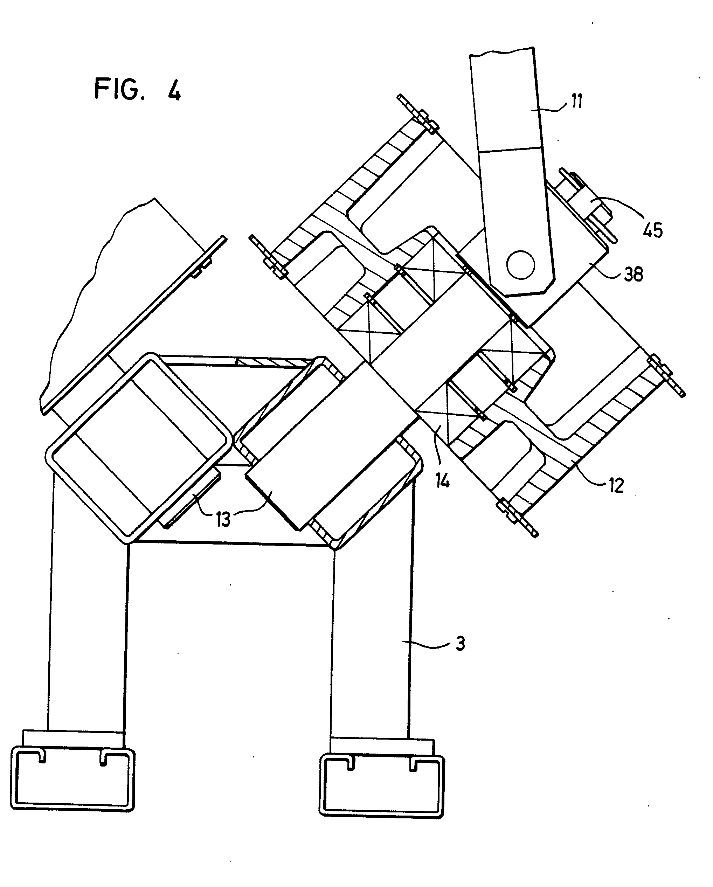

La figure 4 montre comment les deux galets fous 12 de chacun des ensembles de support et d'entraînement sont montés sur le socle 1. Le pied 3 formé de segments de profilés soudés les uns aux autres en forme d'étrier, est fixé sur les longerons 2 du socle 1 et porte deux arbres 13 placés en V à 90° l'un de l'autre et soudés par leur extrémité inférieure sous un angle de 45° à la partie supérieure de l'étrier. Chacun de ces arbres 13 porte un double palier à billes 14 sur lequel est monté un des galets 12. Ces derniers ont une surface latérale lisse et servent de guidage et de support à la courroie 8.

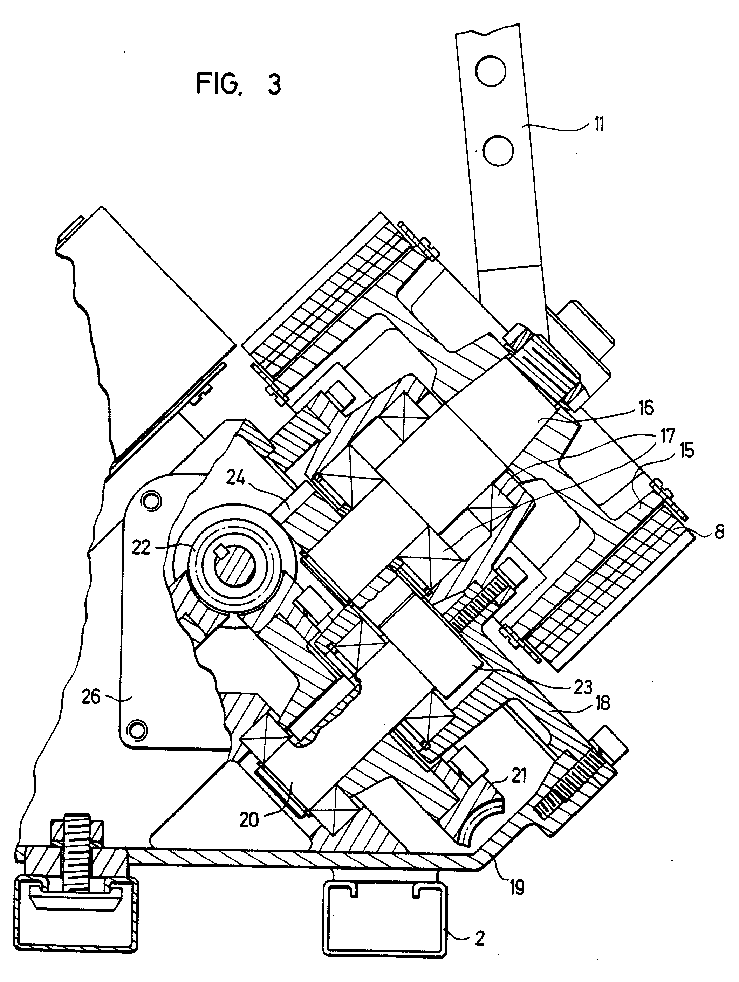

Les galets 15 placés aux extrémités de chacun des ensembles de support et d'entraînement sont visibles à la fig. 3, un de ces galets étant représenté en coupe. On voit qu'il présente dans sa face latérale cylindrique des gorges coopérant avec les nervures intérieures de la courroie 8. Il est fixé par emmanchement et, le cas échéant, clavetage, sur un arbre 16 qui supporte le galet en porte-à-faux dans une paire de paliers 17 fixés eux-mêmes à un couvercle 18 qui vient se placer sur une ouverture latérale que présente un bloc 19 formant le corps du carter 4. Ce bloc est une pièce moulée dont le profil général est en forme de prisme triangulaire et qui est fixée sur les longerons 2 du socle 1. A l'intérieur du corps 19 sont encore montés deux arbres intermédiaires 20 également disposés en V à 90° l'un de l'autre, parallèlement aux arbres 16, et qui portent, d'une part, une roue dentée 21 coopérant avec une même vis sans fin 22, et d'autre part, un pignon 23 qui engrène avec un pignon correspondant 24 fixé à l'extrémité inférieure d'un des arbres 16. Ainsi, l'arbre moteur 22 qui est supporté par le bloc moteur 5 décrit plus loin, comporte une vis d'entraînement avec laquelle sont en prise les deux roues dentées 21 orientées à 90° l'une de l'autre. Ces deux poulies entraînent chacune un des arbres 20 et par conséquent un des arbres 16 et une des courroies crantées 8. L'engrenage d'entraînement est ainsi logé dans un espace extrêmement réduit entre les ensembles de support et d'entraînement et sous ces derniers. Quant au moteur proprement dit 5, il comporte un bloc 25 pourvu d'une bride et est fixé par des boulons à la bride 26 du carter 4. Le moteur hydraulique 5 est alimenté par deux tuyauteries 27 qui sont connectées, comme on le verra plus loin, au groupe de commande disposé hors de la tranchée.

Au-dessus des ensembles de support et d'entraînement, est monté l'ensemble de solidarisation 9 qui comporte quatre galets 28 à profil en V. Deux de ces galets sont pivotés entre deux bras parallèles 29 tandis que les deux autres sont pivotés de la même manière entre deux bras 30. D'autre part, les bras 29 et 30 sont suspendus par leur point milieu à une bascule formée de deux bras 31 suspendus eux-mêmes par leur point milieu à un étrier 32. Ce dernier est accroché à un arbre rotatif vertical fileté 33 supporté et maintenu par un carter 34 enfermant un dispositif de compensation à ressort pour tenir compte des irrégularités de diamètre du câble ou du tube à transporter. Par rotation de l'arbre 33 à la main au moyen d'une manivelle 35, on peut faire monter et descendre l'équipage de solidarisation 9. Quant au carter 34, il est solidaire de l'armature 10 dont les quatre montants 11 sont formés chacun de deux pièces 11a et 11b télescopées l'une dans l'autre et solidarisées par des goupilles 36 amovibles.

Comme on le voit aux fig. 1 et 4, les parties inférieures 11b des montants 11 sont pourvues d'étriers 37 qui sont articulés aux extrémités supérieures des arbres fixes 13. De préférence, ces étriers sont montés sur des manchons cylindriques 38 (fig. 4) retenus en place par des goupilles 45 aux extrémités de ces arbres. Ainsi, en enlevant les goupilles 36 situées sur un des côtés du transporteur, on peut séparer les parties 11a des parties 11b des montants situés sur un côté du transporteur et faire pivoter l'ensemble de la superstructure autour des axes d'articulation des étriers 37 sur les deux arbres 13 situés de l'autre côté. L'ensemble de solidarisation prend alors la position représentée en traits mixtes à la fig. 2, de sorte que le câble représenté en traits mixtes en 39 est entièrement libéré.

Lorsque le transporteur est en position de fonctionnement, le câble est soulevé et guidé par les deux rampes 40 ménagées à l'avant et à l'arrière de l'appareil et amené à la hauteur des courroies crantées 8. Les galets 28 appuient sur la génératrice supérieure du câble, de sorte que ce dernier est guidé et entraîné par les courroies crantées motrices 8. Ces dernières sont de profil rectangulaire. Elles peuvent pousser le câble devant elles dans la tranchée ou le tirer dans le fond de celle-ci.

Comme on le voit à la fig. 2, l'appareil décrit est capable de déplacer des câbles 39 ayant des diamètres extrêmement variables. En dimensions relatives, on voit, à cette figure, un câble de dimension maximum et un câble de dimension minimum tel qu'ils peuvent être entraînés par le transporteur décrit.

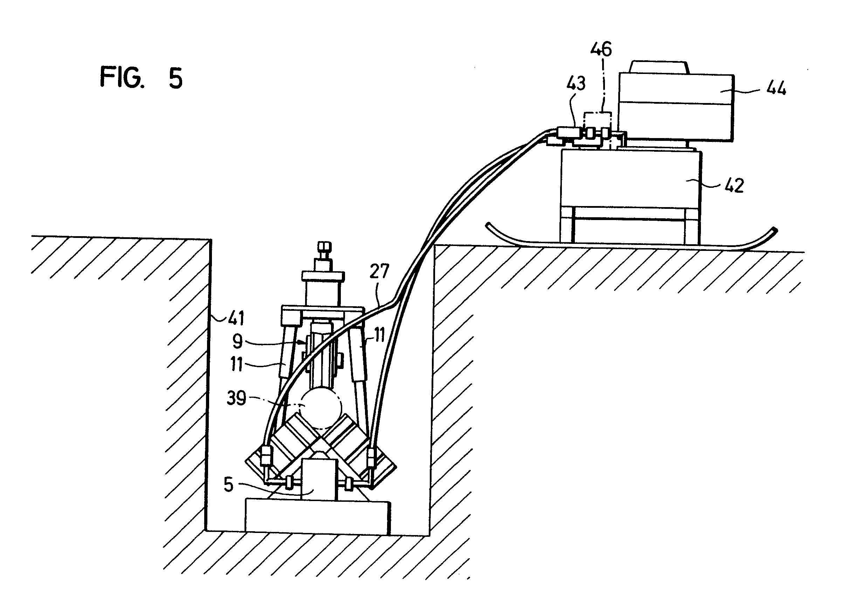

La figure 5 montre encore le transporteur installé dans le fond d'une tranchée étroite 41. Les deux tubes d'alimentation en fluide 27 sont raccordés hors de la tranchée à un groupe de commande 42. Ce dernier comporte une pompe entraînée par un moteur 44 qui peut être électrique, à gaz, à combustion interne ou à explosion. Le groupe de commande 42 comporte également un équipement de vannes 43 permettant de régler la puissance et la vitesse du moteur 5, et par conséquent la vitesse des galets et finalement du câble. Ces vannes peuvent être à commande à distance et on a représenté à la fig. 5 un coffret de commande 46 qui sera relié par des moyens de transmissions hertziens à conducteurs ou d'un autre type à un poste de commande central disposé par exemple près du treuil et capable de piloter tous les transporteurs installés de distance en distance le long de la tranchée 41.

Dans le cas où, au lieu du moteur 5 de type hydraulique, on prévoit un moteur électrique, ce dernier peut être du type à courant continu ou asynchrone et le groupe de commande 42, au lieu d'être équipé d'un transformateur ou d'un convertisseur et d'un dispositif de commande à thyristor. Dans ce cas, le moteur peut être réglé par action sur sa tension avec un système de réglage qui assure, comme dans le cas de la commande hydraulique, une avance de câble à vitesse constante.

On se rend compte qu'une commande de ce genre permet d'assurer la synchronisation des opérations d'une façon très simple. En effet, tous les transporteurs étant entraînés à la même vitesse, les risques d'à coup par suite de mauvaise synchronisation sur des segments de câble compris entre deux transporteurs sont absolument éliminés. D'autre part, il suffit d'équiper le treuil d'un régulateur à effort de traction constant pour que le système fonctionne automatiquement et de façon très souple. La consigne de vitesse est donnée par les transporteurs tandis que le treuil assure l'avance du premier segment de câble en évitant de la solliciter au-delà de sa résistance.

D'autre part, grâce à sa construction ramassée, et surtout grâce à la disposition du socle, entre les courroies crantées 8 et en dessous d'elles, l'ensemble de la construction est d'un encombrement extrêmement réduit, ce qui facilite considérablement l'installation du transporteur dans une tranchée de faibles dimensions. Comme on le voit à la fig. 2, la largeur totale de l'appareil est donnée par la distance entre les bords extérieurs des courroies 8. Ni le moteur, ni les organes d'entraînement, ni le bâti ne dépassent ce gabarit. Le poids de l'appareil est réduit et il peut être séparé en plusieurs tronçons qui se montent facilement les uns sur les autres. De ce fait, les différentes parties peuvent être portées séparément par un homme, ce qui permet de supprimer tout engin de levage lors de la mise en place. La construction décrite a encore pour avantage que le centre de gravité de l'appareil est abaissé au maximum, ce qui contribue à la stabilité malgré la réduction du poids.

Enfin, du fait de la simplicité de la construction, le prix de revient du transporteur est également très réduit.

**Revendications**

1. Transporteur de câble comprenant un organe moteur, un train d'entraînement du câble formé de deux ensembles de support et d'entraînement placés en V sous le câble et d'un ensemble de solidarisation agissant verticalement sur le câble pour assurer son contact avec les ensembles de support et d'entraînement, et un bâti comportant un socle rigide disposé sous les deux ensembles de support et d'entraînement et entre eux, caractérisé en ce que lesdits ensembles de support et d'entraînement comportent des galets montés en porte-à-faux sur des arbres supportés eux-mêmes par le bâti, le socle et l'organe moteur ne dépassant pas en largeur l'encombrement du train d'entraînement du câble, et en ce que l'ensemble de solidarisation est supporté par une armature rigide qui ne dépasse pas non plus, en largeur, dans sa position de travail, l'encombrement du train d'entraînement et qui s'appuie sur les extrémités supérieures desdits arbres.

2. Transporteur selon la revendication 1, caractérisé en ce que chaque ensemble de support et d'entraînement comporte une série de galets et une courroie sans fin montée sur les galets, en ce qu'un des deux galets d'extrémité de chaque ensemble est un galet moteur, solidaire de son arbre, et en ce que lesdits arbres portant les galets moteurs sont supportés par leur extrémité inférieure dans des paliers solidaires du bâti, les autres galets étant montés fous sur des arbres fixes.

3. Transporteur selon la revendication 2, caractérisé en ce que les galets d'extrémités sont conformés de façon à assurer l'entraînement forcé des courroies.

4. Transporteur selon la revendication 2, caractérisé en ce que l'armature rigide de l'ensemble de solidarisation comporte quatre montants qui sont articulés chacun à l'extrémité supérieure d'un arbre, ces arbres étant fixes et supportant des galets fous.

5. Transporteur selon la revendication 4, caractérisé en ce que les montants de l'armature sont composés de deux pièces séparables l'une de l'autre de manière à permettre d'écarter l'ensemble de solidarisation par basculement de l'armature autour d'un axe défini par les articulations des deux montants se trouvant sur un même côté du transporteur.

6. Transporteur selon la revendication 1, caractérisé en ce que l'organe moteur comporte un moteur hydraulique ou électrique, à commande de vitesse et en ce que le transporteur comporte en outre un groupe de commande distinct du bâti, connecté au moteur par des tubulures ou des câbles et agencé de façon à pouvoir être installé à côté d'une tranchée dans laquelle le transporteur est placé.

**Claims**

1. Cable conveyor comprising a driving component, a cable-driving wheel-train formed of two supporting and driving assemblies placed in V-shape under the cable and of an interlocking assembly acting vertically on the cable to ensure its contact with the supporting and driving assemblies, and a frame comprising a rigid base disposed under the two supporting and driving assemblies and between them, characterized in that the said supporting and driving assemblies comprise rollers overhangingly mounted on shafts themselves supported by the frame, the base and the driving component not exceeding in width the space occupied by the cable-driving wheel-train, and in that the interlocking assembly is supported by a rigid framework which also does not exceed in width, in its working position, the space occupied by the driving wheel-train and which rests upon the upper ends of said shafts.

2. Conveyor according to claim 1, characterized in that each supporting and driving assembly comprises a series of rollers and an endless belt mounted on the rollers, in that one of the two end rollers of each assembly is a driving roller integral with its shaft, and in that the said shafts bearing the driving rollers are supported at their lower ends in bearings integral with the frame, the other rollers being mounted loose on fixed shafts.

3. Conveyor according to claim 2, characterized in that the end rollers are shaped so as to ensure the forced driving of the belts.

4. Conveyor according to claim 2, characterized in that the rigid framework of the interlocking assembly comprises four uprights which are each linked to the upper end of a shaft, these shafts being fixed and supporting loose rollers.

5. Conveyor according to claim 4, characterized in that the uprights of the framework are composed of two parts separable from one another so as to allow the interlocking assembly to be moved aside by swinging the framework about an axis defined by the links of the two uprights situated on the same side of the conveyor.

6. Conveyor according to claim 1, characterized in that the driving component comprises a hydraulic or electric motor having a speed control, and in that the conveyor further comprises a control unit separate from the frame, connected to the motor by pipes or cables, and arranged so as to be able to be installed beside a trench in which the conveyor is placed.

## Ansprüche

1. Kabelfördervorrichtung mit einem motorischen Organ, einer Kabelvorschiebeeinrichtung bestehend aus zwei in V-Anordnung unter dem Kabel befindlichen Stütz- und Vorschiebeeinheiten und einer Einwirkanordnung, die vertikal auf das Kabel einwirkt um seine Anlage an den Stütz- und Vorschiebeeinheiten zu gewährleisten, und mit einem Gestell, das einen unter den beiden Stütz- und Vorschiebeeinheiten und zwischen ihnen angeordneten, starren Sockel aufweist, dadurch gekennzeichnet, dass die besagten Stütz- und Vorschiebeeinheiten Rollen aufweisen, die in freitragender Anordnung auf Wellen sitzen, die ihrerseits am Gestell gelagert sind, wobei der Sockel und das motorische Organ an Breite den Raumbedarf der Kabelvorschiebeeinrichtung nicht überschreiten, und ferner dadurch gekennzeichnet, dass die Einwirkanordnung durch einen steifen Gestellteil getragen ist, der ebenfalls in seiner Arbeitslage den Raumbedarf der Kabelvorschiebeeinrichtung an Breite nicht überschreitet und der sich auf den oberen Enden der besagten Wellen abstützt.

2. Kabelfördervorrichtung nach Anspruch 1, dadurch gekennzeichnet, dass jede Stütz- und Vorschiebeeinheit eine Serie von Rollen und einen diese umlaufenden, endlos in sich geschlossenen Riemen aufweist, dass eine der beiden endständigen Rollen jeder Einheit eine antreibende Rolle ist, die auf ihrer Welle festsitzt, und dass die besagten Wellen, auf denen die antreibenden Rollen festsitzen, mit ihrem unteren Ende in am Gestell festsitzenden Lagern drehen, wogegen die anderen Rollen lose drehbar auf festsitzenden Wellen angeordnet sind.

3. Kabelfördervorrichtung nach Anspruch 2, dadurch gekennzeichnet, dass die endständigen Rollen so ausgebildet sind, dass sie den Zwangsantrieb der Riemen gewährleisten.

4. Kabelfördervorrichtung nach Anspruch 2, dadurch gekennzeichnet, dass der die Einwirkanordnung tragende steife Gestellteil vier Beine hat, die je an einem oberen Ende einer Welle angelenkt sind, wobei diese Wellen feststehend sind und auf ihnen lose drehbar angeordnete Rollen tragen.

5. Kabelfördervorrichtung nach Anspruch 4, dadurch gekennzeichnet, dass die Gestellbeine aus zwei voneinander trennbaren Teilen zusammengesetzt sind, derart, dass es möglich ist, die Einwirkanordnung um eine durch die Anlenkungen der beiden sich auf der gleichen Geräteseite befindlichen Beine bestimmte Achse wegzuschwenken.

6. Kabelfördervorrichtung nach Anspruch 1, dadurch gekennzeichnet, dass das motorische Organ einen drehzahleinstellbaren hydraulischen oder elektrischen Motor aufweist und dass das Gerät ausserdem eine vom Gestell gesonderte Steuergruppe aufweist, die über Rohrleitungen oder Kabel an den Motor angeschlossen und ausgebildet ist, um neben einem Graben installiert werden zu können, in dem sich das Kabelfördervorrichtung befindet.

FIG. 1

0 006 097

# FIG. 2

FIG. 3

FIG. 4

FIG. 5